# EUROPEAN PATENT SPECIFICATION

(11) **EP 2 604 059 B1**
(45) Date of publication and mention of the grant of the patent: **13.05.2020**
(21) Application number: 11735517.2
(22) Date of filing: 15.07.2011
(51) Int. Cl.: H04W 24/10, H04W 24/02, H04W 84/12, H04L 12/28, H04W 84/04

(54) **MONITORING CONNECTION CONDITIONS OF A PLURALITY OF COMMUNICATION TECHNOLOGIES IN THE VICINITY OF A HOME GATEWAY**
ÜBERWACHEN VON VERBINDUNGSBEDINGUNGEN EINER VIELZAHL VON KOMMUNIKATIONSTECHNOLOGIEN IN DER UMGEBUNG EINES HOME GATEWAY
SURVEILLER LES CONDITIONS DE LIAISON D'UNE PLURALITÉ DE TECHNOLOGIES DE COMMUNICATION DANS LE VOISINAGE D'UNE PASSERELLE DOMESTIQUE

(30) Priority: 12.08.2010 EP 10251439
(43) Date of publication of application: 19.06.2013
(73) Proprietor: British Telecommunications public limited company, London EC1A 7AJ (GB)
(72) Inventor: EVANS, Gareth, David, London EC1A 7AJ (GB); TOWNEND, David, Paul, London EC1A 7AJ (GB)
(74) Representative: British Telecommunications public limited company Intellectual Property Department
(86) International application number: PCT/GB2011/001065
(87) International publication number: WO 2012/020208

(56) References cited:
- EP-A2- 1 835 636
- WO-A1-2010/034495
- US-A1- 2007 167 144
- "3rd Generation Partnership Project; Technical Specification Group Radio Access Networks; Home Node B Radio Frequency (RF) Requirements (FDD) (Release 9)", 3GPP STANDARD; 3GPP TR 25.967, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. 9.0.0, 1 May 2009 (2009-05-01), pages 1-55, XP050369580,

## Description

This invention relates to a system for assisting the installation of a communications service to a customer, particularly in a domestic setting. In particular, there are several ways in which various communications devices can be arranged to communicate with each other within a home network, such as wireless, Ethernet, and power line connection. The Ethernet connection is a fixed wire line which is the most reliable and most secure, but can be inconvenient if devices are required to be used a long way apart, or to be mobile. A wireless connection is more versatile, but may not work reliably in the presence of interference or congestion, or if the devices which are to communicate are out of range of each other. Powerline connections can be used in some circumstances but are reliant on the availability of an otherwise unused power outlet at each required location.

When a customer requests a new communications service, such as a home networking capability, it is desirable that the service provider can assess which technology is most appropriate for the service to be installed at the customer premises. A service provider may prefer to recommend Ethernet in order to have the greatest certainty that the system will work, but this may result in an inconvenient or impractical set-up for the user, which may in some cases deter the user from installing the service at all. Alternatively, a service provider may offer a wireless connection as being more attractive to the user, resulting in inconvenience if the connection proves unreliable and has to be replaced with something more reliable.

Many internet "home gateways" or "routers" are provided with an associated "internet telephone" - a wireless telephone handset which connects, through a wireless connection, e.g. "Wireless LAN" (WiFi) or DECT, to the home gateway, with the core telephone network through the packet-switched "Internet" instead of through the conventional circuit-switched "POTS" (plain old telephone system). As with conventional cordless handsets, such a device is generally kept attached to its base station (the home gateway device) when not in use, as the home gateway device also acts as a battery charger. If a user tries to use such a device in an area where wireless reception from the base station is poor, he can readily move to another location.

Such an outcome is less practical for an installation such as a computer work station, or a broadband media terminal. Home users often wish to install communications equipment in different locations around the house. For example, if a user wishes to subscribe to an Internet television service, he needs to install a device that connects a television set to the home gateway to convert a signal from the home gateway into content for display on the television screen (a so-called "set top box", although the narrow profile of modern flat-screen TV sets necessitates that in modern practice such devices are usually installed below the TV set itself). A TV set may also have such functionality installed as an integral part of the set. He may wish to install this device in a different room from that in which the internet home gateway is installed, for example because the home gateway has to be in the same room as the network termination socket, and/or a general purpose computer which is required to have a hard-wired Ethernet connection to the home gateway for additional data security. A user may be limited in his choice of where to install such a device, and would not want to find, after he has subscribed to a service and installed the equipment, that it cannot be used in the way he intended.

The connection to a set top box needs to be reliable and have good bandwidth in order to provide a good user experience. Operators have tended not to recommend 2.4GHz WLAN for such services because in a significant number of homes WLAN or RF interference will mean that the WLAN link to the STB is unreliable. High frequency (5GHz) WLAN systems have been used by some operators but this is very expensive, and may not overcome all interference problems.

It is known, for example from WO2010/034495 (NEC) to use a wireless probe to identify the optimum position and configuration of a radio base station. However, service providers generally recommend the use of wired Ethernet or powerline connections for such devices, to ensure the connection will be adequate. However, although Ethernet is very reliable, it is complex to install. Powerline is almost as reliable, and is easy to install provided spare power sockets are available, but it is expensive and has relatively high power consumption. In some circumstances the domestic power supply may be unsuitable for such use, for example because of high impedances in the system, other data already being carried or other factors. In general, it is currently preferred to use WLAN connections for home broadband/internet connections where it is possible to do so. It is the object of the present invention to provide a method of determining whether a particular communications technology is indeed suitable in a given situation.

According to the present invention, there is provided a process for identifying a service delivery technology for connecting a communications device to a communications base station connected to a communications network according to the subject-matter of independent claim 1.

In a further, complementary aspect, the invention provides a telecommunications service provisioning system according to the subject-matter of independent claim 6.

The invention allows a service provider, through the service provisioning management platform, to identify whether the local communications environment is suitable for a particular communications technology to be used for the proposed connection.

Preferred ambodiments are set out in the dependent claims.

According to the invention, the process measures conditions in the wireless environment. The measuring device may comprise a moveable wireless device capable of measuring the quality of the wireless environment traffic between the moveable wireless device and the wireless base station, and which reports measurements to the service provisioning client application. The portable wireless device may be an Internet-enabled handset associated with the wireless base station. This may be a telephone handset and capable of taking and reposting such measurements whilst a speech call is in progress.

The same principle may also be applied to assess the capability of a connection to an electricity supply network for its suitability for communications purposes.

The measuring device may comprise an interference monitoring unit associated with or incorporated into the base station for detecting the presence of interference sources which may interfere with communication between the base station and the device which it is proposed to install. The measuring process may operate continuously, so as to detect intermittent interference sources or other time-variant phenomena, and records measurements of interference taken over a predetermined period for subsequent retrieval.

The client application can be installed in the base station, or in an associated handset, in the form of firmware or an after-market software application.

The monitoring system may take various forms. Two such systems are described below, but it should be understood that the process may use either or both methods to monitor the wireless environment.

The monitoring system may comprise an interference monitoring unit associated with the wireless base station for detecting the presence of interference sources which may interfere with communication between the base station and the device which it is proposed to install. Such a monitoring system may operate continuously, so as to detect intermittent interference sources or other time-variant phenomena, so as to be able to report more than an instantaneous value to the server application when required.

The monitoring system may also comprise a moveable wireless device capable of measuring the quality of signal traffic between the moveable wireless device and the wireless base station. The moveable wireless searching device can therefore be used to search the customer premises to determine where in the premises an acceptable wireless signal can be detected, and therefore whether a wireless connection can be established for the desired service, before the service is set up and the requisite hardware installed. Any portable wireless device capable of detection by the base station may be used as the searching device, but in a preferred embodiment, the moveable wireless searching device is an Internet telephone or other cordless handset associated with the wireless base station. This is convenient because the handset is typically supplied with the base station, and is able to communicate with it, with no additional configuration operations required of the user. The network service provider will also be aware of the capabilities of the handset and thus have a benchmark against which to compare the performance with that required for the planned service. The handset is also readily portable, allowing a user to explore various possible locations for the new equipment. Moreover, if the user is using the handset to discuss the installation of the service with an operative at a remote call centre, he does not need to carry and operate a second device to perform the search.

The monitoring system may include means for generating test signals to determine properties such as reliability, channel quality, bit error rate, latency and throughput capacity. Such tests may involve test signals transmitted from the base station to the handset, and/or vice versa.

Two embodiments of the invention will now be described, by way of example, with reference to the drawings in which:
Figure 1 is a schematic depiction of the various elements which cooperate in the performance of the invention in a first embodiment, and
Figure 2 is a schematic depiction of the various elements which cooperate in the performance of the invention in a second embodiment
Figure 3 is a flow chart illustrating a service ordering process including the technical steps comprising the invention.

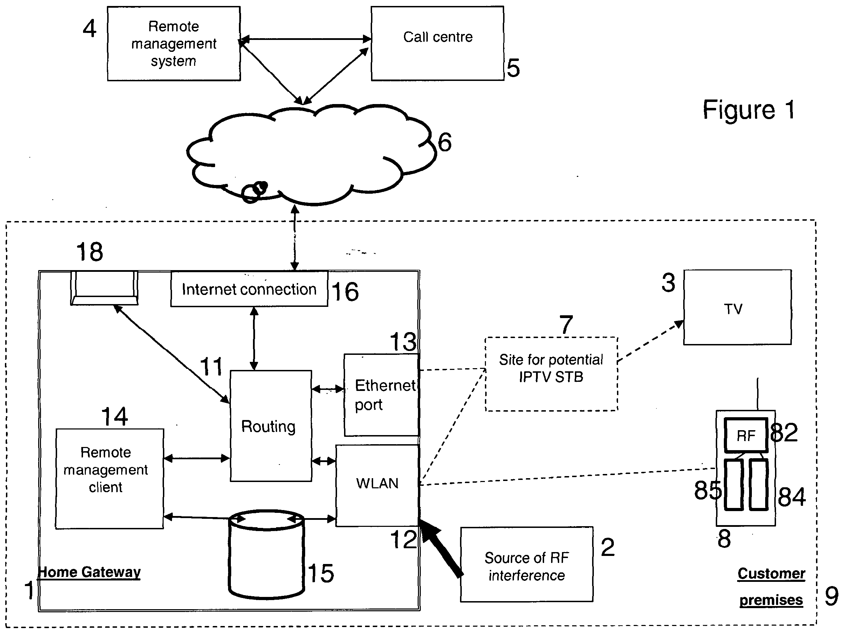

Figure 1 shows a wireless base station, depicted as a broadband home gateway 1, installed at a customer's premises 9, and connected over a data communications system such as the "Internet" 6 to a remote management system 4 associated with a call centre 5. The home gateway 1 has a wireless interface 12 for wireless communication with one or more wireless devices 7, 8. Such wireless devices may include an internet-enabled wireless telephone handset 8, or handheld computer device. When not in use, the handset 8 is kept in a docking station 18 which provides an electrical charging capability and also registers its presence to the home gateway. The home gateway 1 also includes an Ethernet port 13 to allow devices to be connected by way of a direct wired connection or via a powerline connection.

The home gateway 1 also includes a router 11 for switching communications traffic between the WLAN connection 12, the Ethernet port 13, and an external connection 16, thereby providing connectivity between devices 7, 8 connected to the home gateway 1 and an external communications network such as the "internet" 6.

The home gateway 1 also has a remote management client agent 14 for communicating over the internet connection 6 with the remote management system 4.

The wireless interface 12 continuously monitors the local wireless environment for sources 2 of interference, and reports the results to a data store 15 which maintains a record of the environment, such that information on the environment may be retrieved by the remote management client 14 as required. An operative at the call centre 5 can use the remote management system 4 to retrieve this data as required, using the remote management client 14, to examine the locally-collected WLAN and RF information. This allows the operative 5 to assess the suitability of the user environment for wireless operation of a desired service.

This arrangement allows the network operator or service provider 5 to remotely collect locally generated WLAN and RF interference data from the home gateway 1 and use it to judge whether or not a wireless solution could be used in the home to connect between the home gateway 1 and a wireless-enabled set top box or media device 7.

Information previously collected by the store 15, can be retrieved by the remote management client 14, under the command of the remote management system 4, to provide an indication of wireless activity in the customer's home environment 9. Such information can include data on interference from external sources 2, including historical data on how often such interference is at unacceptable levels. It may also record the level of use of the wireless network controlled by the home gateway 1, as heavy use by other users (for example frequent high-bandwidth downloads) may affect the performance of a further newly-added high-bandwidth item 7.

This information provides an indication of the environment in the vicinity of the home gateway 1, and will determine how well the home gateway would manage an extra device 7. In addition, a portable wireless device 8 can be used to determine whether a suitable location exists for installation of the set top box 7. Any portable device having a wireless connection to the home gateway 1 may be used for this purpose, but in a preferred embodiment a WLAN enabled telephone or tablet handset 8 is used. The handset 8 can be supplied with the home gateway 1, and the remote management system 4 is configured to cause the remote management client 14 to report connectivity information relating to the associated handset 8 as the user moves around the premises, ideally even as the user uses the handset 8 to speak to an operative at the call centre 5.

The monitoring of the wireless link between the home gateway 1 and handset 8 may be performed autonomously by the home gateway 1, but as shown in Figure 1, the handset itself is configured with the capability to report on the RF environment in its vicinity. Thus the RF environment in the vicinity of the RF interface 82 of the handset 8 is monitored by monitoring function 85 enabled by a sub-client 84 controlled by the remote management client 14 (by way of the WLAN connection 12/82), and reports its measurements back to the remote management client 14.

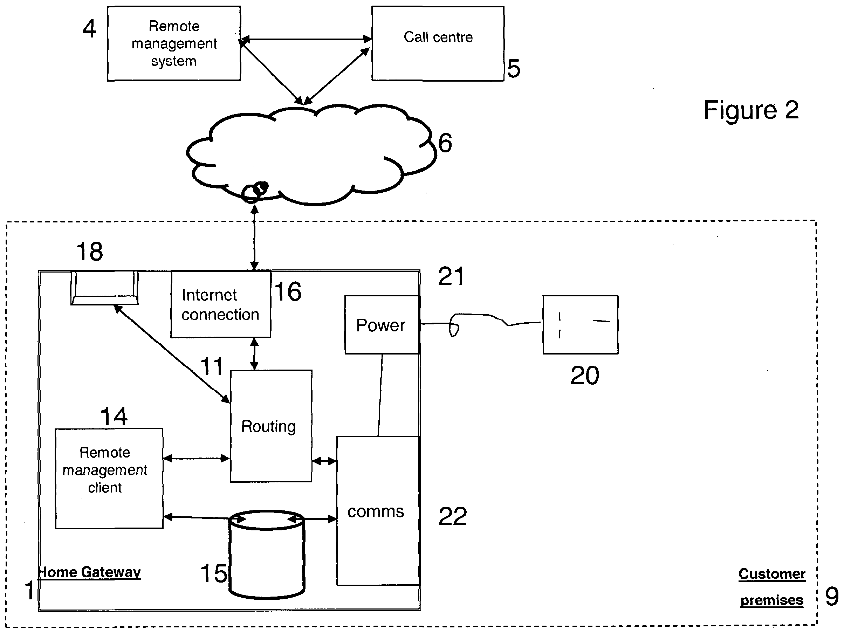

Figure 2 illustrates a variant embodiment for determining the suitability of the domestic power supply for powerline connections. In this embodiment the WLAN connection 12 of Figure 1 is replaced by a power connection comprising a connector 20, a power management unit 21 and a communications unit 22. (It should be understood that the embodiment of Figure 1 will also typically include a power connection and power management unit, but these play no direct part in the communications process. Moreover, embodiments are envisaged which include the capabilities of the embodiments of Figures 1 and 2, to analyse both wireless and powerline connections, and possibly others such as Ethernet)

The power management system 20 distributes electrical power at the required voltages to the various components of the gateway 1, and also includes a communications processor 22 having a data input/output function for identifying data transmitted as a modulation over the power supply network. Such data is routed to and from the router 11.

In use, and in response to a prompt from the remote management system 4, the client 14 monitors the power supply through the communications processor 22 to detect potential sources of interference for a potential power line connection. Data may also be collected continuously by the communications processor 22 for storage in the store 15 and subsequent retrieval.

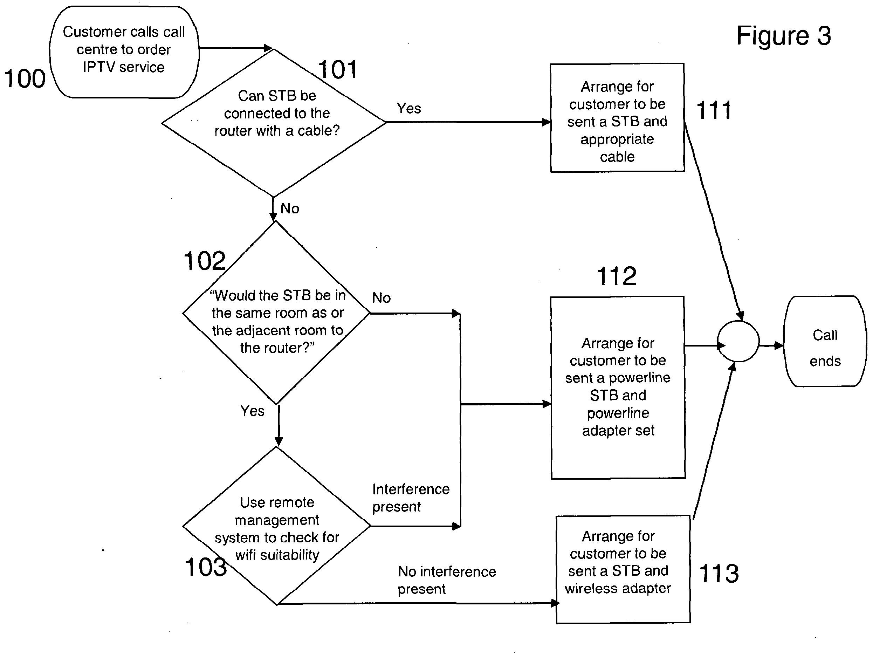

The process of ordering a new internet-based service is shown in Figure 3. This is described with reference to the embodiment of Figure 1, but it will be apparent to the person skilled in the art how the process may be varied for the embodiment of Figure 2.

The customer initially uses the handset 8 to make a call through the internet connection 6 to the call centre 5 (step 100). The operative at the call centre takes the customer through a number of steps to determine what type of connection is most appropriate. For example, if the location of the user's TV set 3 (and therefore also the proposed location of the STB 7) is in close proximity to the home gateway 1 (101) the simplest and most reliable connection is through a short Ethernet cable, and the operative can set up an order for delivery accordingly (step 111). Similarly, if the STB 7 and home gateway 1 are to be a long way apart (102), for example on different storeys of a building, powerline connection is likely to be the preferred solution (112). Powerline connection is normally made through the same Ethernet ports in the home gateway 1 and STB 7, but for an intermediate part of the routing the signals are modulated over the domestic electric house wiring. In the embodiment of Figure 2, a powerline adapter 22 is integrated into the gateway device.

If it is likely that wireless is a potential solution, the call centre operative 5 uses the remote management system 4 to determine whether the wireless environment is indeed suitable (step 103). This retrieves data from the store 15 relating to potential interference or capacity problems. The caller is also requested to move around the premises 9, with the handset 8, to the proposed location of the STB 7 so that the handset 8 can report to the remote management agent 14 on the wireless conditions at that location. The connectivity information for specified relative positions of the home gateway 1 and the television set 3 to which the STB 7 is to be connected enable a reliable judgement to be made as to whether or not a wireless connection could be used.

When a new service is ordered by the customer requiring connection of a set top box 7 to an existing home gateway 1, the service provider can use the information previously collected to determine whether to supply the potential customer with a wireless adapter for use with the STB 7 (step 113). Alternatively, if the existing wireless environment will not be sufficient, an alternative technology can be supplied such as powerline (step 112) or Ethernet cable (111), thus ensuring an increased chance of the customer managing to establish a good connection to the STB 13 when it is delivered. Another possible option for delivery of the service may be to provide an upgraded STB, including the ability to connect wirelessly.

Using the embodiment of Figure 2, an operative can, in a similar way, assess the suitability of the local domestic power supply for a powerline connection. In this case measurement can be readily made at an electrical socket close to the gateway device. If it is desired to measure the quality of connection between that socket and one close to the intended location of the STB, a beacon device for plugging into the supply at the remote location, may be supplied for use as a probe in a similar way to the handset 8 in Figure 1.

Using this information, the operative at the call centre 5 can therefore determine which solution (111, 112, 113) is most expedient, and order the appropriate equipment for delivery to the customer.

If the handset and/or the base station have a position-finding capability e.g. GPS, the location of the device can also be supplied to the operator as this may also provide useful data for example on potential interference from neighbouring devices, or data may be obtained from a first gateway close to a proposed new location for a second gateway, for example when the owner of the second gateway is planning to move premises.

The operator may also use data collected from neighbouring gateways, either previously archived or polled at the time of the enquiry relating to the newly-proposed installation, in making this decision. For example it may be used to identify whether the proposed new gateway has the potential for interference with such neighbouring gateways.

## Claims

1. A process for identifying a service delivery technology for connecting a communications device (7) to a communications base station (1) connected to a communications network (6),
comprising the steps of
providing the base station (1) with a service provisioning client application (14), the service provisioning client application (14) being arranged to cause a measuring device (8) to measure wireless connectivity conditions in the vicinity of the base station and to report said wireless connectivity conditions to the service provisioning client application (14),
and wherein the service provisioning client application reports the measured wireless connectivity conditions to a remote service provisioning management platform (4) connected to the base station (1) through the communications network (6),
**characterized in that** the service provisioning management platform (4) identifies the service delivery technology appropriate for connecting the communications device (7) to the base station from a plurality of service delivery technologies including a wireless system and at least one other mode, the identifying of the service delivery technology being made according to the reported wireless connectivity conditions.

2. A process according to claim 1, wherein the measuring device (8) comprises a moveable wireless device (8) capable of measuring the quality of signal traffic between the moveable wireless device and the base station (1), and which reports measurements to the service provisioning client application (14).

3. A process according to claim 1, wherein the base station (1) has a connection (20) to an electricity supply network and includes a measuring device which monitors the electrical environment in the electricity supply network for its suitability for communications purposes.

4. A process according to any preceding claim, wherein the measuring device (8) comprises an interference monitoring unit (85) for detecting the presence of interference sources which may interfere with communication between the base station (1) and the communications device (7) which it is proposed to install for communication with the base station (1).

5. A process according to claim 4, in which the measuring device (8) operates continuously, so as to detect intermittent interference sources or other time-variant phenomena, and the service provisioning management application (4) records measurements of interference taken over a predetermined period for subsequent retrieval.

6. A telecommunications service provisioning system, comprising a service provisioning management platform (4) connected to a remote communications base station (1) through a communications network (6) for co-operative operation with a service provisioning client application (14) operating on said remote communications base station (1), the service provisioning management platform (4) having information processing means for retrieving data from the service provisioning client application relating to wireless connectivity conditions in the vicinity of the base station, and **characterized in that** the service provisioning management platform has means for identifying, from a plurality of service delivery technologies including a wireless system and at least one other mode, a service delivery technology appropriate for connecting a communications device (7) to the base station (1) according to the wireless connectivity conditions.

## Patentansprüche

1. Verfahren zum Identifizieren einer Dienstliefertechnologie zum Verbinden einer Kommunikationsvorrichtung (7) mit einer Kommunikationsbasisstation (1), die mit einem Kommunikationsnetz (6) verbunden ist, die folgenden Schritte umfassend:
Versehen der Basisstation (1) mit einer Diensterbringungs-Client-Anwendung (14),
wobei die Diensterbringungs-Client-Anwendung (14) dazu eingerichtet ist, eine Messvorrichtung (8) zu veranlassen, Bedingungen für drahtlose Konnektivität in der Nähe der Basisstation zu messen und die Bedingungen für drahtlose Konnektivität an die Diensterbringungs-Client-Anwendung (14) zu melden,
und wobei die Diensterbringungs-Client-Anwendung die gemessenen Bedingungen für drahtlose Konnektivität an eine ferne Diensterbringungs-Managementplattform (4) meldet, die über das Kommunikationsnetz (6) mit der Basisstation (1) verbunden ist,
**dadurch gekennzeichnet, dass** die Diensterbringungs-Managementplattform (4) unter mehreren Dienstliefertechnologien, einschließlich eines drahtlosen Systems und mindestens eines anderen Modus, die Dienstliefertechnologie identifiziert, die zum Verbinden der Kommunikationsvorrichtung (7) mit der Basisstation geeignet ist, wobei das Identifizieren der Dienstliefertechnologie gemäß den gemeldeten Bedingungen für drahtlose Konnektivität vorgenommen wird.

2. Verfahren nach Anspruch 1, wobei die Messvorrichtung (8) eine bewegliche drahtlose Vorrichtung (8) umfasst, die in der Lage ist, die Qualität von Signalverkehr zwischen der beweglichen drahtlosen Vorrichtung und der Basisstation (1) zu messen, und die Messungen an die Diensterbringungs-Client-Anwendung meldet.

3. Verfahren nach Anspruch 1, wobei die Basisstation (1) eine Verbindung (20) mit einem Elektrizitätsversorgungsnetz aufweist und eine Messvorrichtung beinhaltet, die das elektrische Umfeld in dem Elektrizitätsversorgungsnetz auf seine Eignung für Kommunikationszwecke überwacht.

4. Verfahren nach einem der vorhergehenden Ansprüche, wobei die Messvorrichtung (8) eine Störungsmesseinheit (85) zum Erkennen des Vorliegens von Störquellen, die die Kommunikation zwischen der Basisstation (1) und der Kommunikationsvorrichtung (7) stören können, umfasst, deren Installation zur Kommunikation mit der Basisstation (1) vorgeschlagen wird.

5. Verfahren nach Anspruch 4, wobei die Messvorrichtung (8) kontinuierlich in Betrieb ist, um intermittierende Störquellen oder andere zeitlich variierende Phänomene zu erkennen, und die Diensterbringungs-Managementanwendung (4) Messungen von Störungen, die über eine bestimmte Periode vorgenommen werden, zum späteren Abruf aufzeichnet.

6. Telekommunikationsdienst-Erbringungssystem, umfassend eine Diensterbringungs-Managementplattform (4), die zum kooperativen Betrieb mit einer Diensterbringungs-Client-Anwendung (14), die auf einer fernen Kommunikationsbasisstation (1) betrieben wird, über ein Kommunikationsnetz (6) mit der fernen Kommunikationsbasisstation (1) verbunden ist, wobei die Diensterbringungs-Managementplattform (4) Informationsverarbeitungsmittel zum Abrufen von Daten von der Diensterbringungs-Client-Anwendung bezüglich Bedingungen für drahtlose Konnektivität in der Nähe der Basisstation aufweist, und **dadurch gekennzeichnet, dass** die Diensterbringungs-Managementplattform Mittel zum Identifizieren einer Dienstliefertechnologie, die zum Verbinden einer Kommunikationsvorrichtung (7) mit der Basisstation (1) geeignet ist, unter mehreren Dienstliefertechnologien, einschließlich eines drahtlosen Systems und mindestens eines anderen Modus, gemäß den gemeldeten Bedingungen für drahtlose Konnektivität aufweist.

## Revendications

1. Procédé d'identification d'une technologie de fourniture de services pour connecter un dispositif de communication (7) à une station de base de communication (1) connectée à un réseau de communication (6), comprenant les étapes de fourniture à la station de base (1) d'une application client d'approvisionnement de services (14), l'application client d'approvisionnement de services (14) étant agencée pour amener un dispositif de mesure (8) à mesurer les conditions de connectivité sans fil au voisinage de la station de base et à signaler lesdites conditions de connectivité sans fil à l'application client d'approvisionnement de services (14), et dans lequel l'application client d'approvisionnement de services signale les conditions de connectivité sans fil mesurées à une plateforme à distance de gestion d'approvisionnement de services (4) connectée à la station de base (1) par l'intermédiaire du réseau de communication (6),
**caractérisé en ce que** la plateforme de gestion d'approvisionnement de services (4) identifie la technologie de fourniture de services appropriée à la connexion du dispositif de communication (7) à la station de base parmi une pluralité de technologies de fourniture de services incluant un système sans fil et au moins un autre mode, l'identification de la technologie de fourniture de services étant exécutée conformément aux conditions de connectivité sans fil signalées.

2. Procédé selon la revendication 1, dans lequel le dispositif de mesure (8) comprend un dispositif sans fil mobile (8) pouvant mesurer la qualité du trafic de signaux entre le dispositif sans fil mobile et la station de base (1), et qui signale les mesures à l'application client d'approvisionnement de services (14).

3. Procédé selon la revendication 1, dans lequel la station de base (1) comporte une connexion (20) à un réseau d'alimentation électrique et inclut un dispositif de mesure qui surveille la capacité d'adaptation de l'environnement électrique dans le réseau d'alimentation électrique à des fins de communication.

4. Procédé selon l'une quelconque des revendications précédentes, dans lequel le dispositif de mesure (8) comprend une unité de surveillance d'interférences (85) servant à détecter la présence de sources d'interférences qui peuvent interférer avec la communication entre la station de base (1) et le dispositif de communication (7) qu'il est proposé d'installer pour la communication avec la station de base (1).

5. Procédé selon la revendication 4, dans lequel le dispositif de mesure (8) fonctionne en continu, de façon à détecter des sources d'interférences intermittentes ou d'autres phénomènes variant dans le temps, et l'application de gestion d'approvisionnement de services (4) enregistre les mesures d'interférences prises sur une période prédéterminée pour une récupération ultérieure.

6. Système d'approvisionnement de services de télécommunication, comprenant une plateforme de gestion d'approvisionnement de services (4) connectée à une station de base de communication à distance (1) par l'intermédiaire d'un réseau de communication (6) pour un fonctionnement en coopération avec une application client d'approvisionnement de services (14) fonctionnant sur ladite station de base de communication à distance (1), la plateforme de gestion d'approvisionnement de services (4) comportant des moyens de traitement des informations servant à récupérer des données de l'application client d'approvisionnement de services relatives aux conditions de connectivité sans fil au voisinage de la station de base, et **caractérisé en ce que** la plateforme de gestion d'approvisionnement de services comporte des moyens servant à identifier, parmi une pluralité de technologies de fourniture de services incluant un système sans fil et au moins un autre mode, une technologie de fourniture de services appropriée à la connexion d'un dispositif de communication (7) à la station de base (1) conformément aux conditions de connectivité sans fil.
